# EUROPEAN PATENT APPLICATION

(11) **EP 2 405 334 A2**
(43) Date of publication of application: **11.01.2012**
(21) Application number: 11170098.5
(22) Date of filing: 16.06.2011
(51) Int. Cl.: G06F 3/048

(54) **Display device, display method, and program**

(30) Priority: 06.07.2010 JP 2010154006
(71) Applicant: AISIN AW CO., LTD., Anjo-shi, Aichi 444-1192 (JP)
(72) Inventor: Miyamoto Shinya, Hokkaido 004-0015 (JP); Ushida Koichi, Aichi 444-1192 (JP)
(74) Representative: TBK

(57) **Abstract**

A display device is described which comprises a scrolling unit that is configured to scroll a list, a scroll direction acquisition unit that, when a list item included in the list is selected, is configured to acquire a prior scroll direction that is a direction in which the list is scrolled immediately before selection of the list item, a setting unit that, based on the prior scroll direction, is configured to set a display mode of a list item frame that displays list item information related to the list item, and a display unit that is configured to display the list item frame in the set display mode. Thus, the list item frame is displayed in the display mode set based on the prior scroll direction. Therefore, information can be suitably displayed in the list item frame, which improves user-friendliness for selection of a list item by the user.

## Description

The present invention relates to a display device that displays a list, a display method for displaying a list, and a program.

### Description of the Related Art

A list display is known as a method for displaying a plurality of data. In a list display according to related art, list item frames for displaying list items have a fixed size. Consequently, if there are many characters to display in a list item frame, sometimes the list item frame cannot display all the characters. To address this problem, Japanese Patent Application Publication No. JP-A-2008-32628 increases the number of characters displayable in a character display column by removing a sub display column.

Even if sub display columns are removed as described in JP-A-2008-32628, there is still a limit to how many characters can be displayed within the list item frame. When all the information that should be displayed within the list item frame cannot be displayed, it is possible to scroll a display range within the list item frame or switch to another screen, for example. However, some information that should be displayed disappears when scrolling the display range within the list item frame, and the information cannot be viewed as a whole. In addition, other list items can no longer be viewed if a switch is made to another screen in order to display all the information that should be displayed.
The present invention was devised in view of the foregoing problems. The present invention provides a display device capable of suitably displaying information in a list item frame, and also provides a display method therefor and a program.

A display device according to a first aspect of the present invention includes: a scrolling unit that scrolls a list; a scroll direction acquisition unit that, when a list item included in the list is selected, acquires a prior scroll direction that is a direction in which the list is scrolled immediately before selection of the list item; a setting unit that, based on the prior scroll direction, sets a display mode of a list item frame that displays list item information related to the list item; and a display unit that displays the list item frame in the set display mode. Thus, the list item frame is displayed in the display mode set based on the prior scroll direction. Therefore, information can be suitably displayed in the list item frame, which improves user-friendliness in terms of selection of a list item by the user.

According to a second aspect of the present invention, the display mode may be a mode in which the list item frame that displays the list item information related to the selected list item is displayed in an expanded manner. In addition, an expansion direction setting unit may be further provided that sets an expansion direction in which to expand the selected list item frame based on the prior scroll direction. Thus, because the list item frame is expanded in the expansion direction set based on the prior scroll direction, the display of the list item frame in a direction reverse to the set expansion direction can be maintained while suitably displaying the list item information in the list item frame, which improves user-friendliness in terms of selection of a list item by the user.

According to a third aspect of the present invention, the expansion direction setting unit may set the expansion direction to a direction reverse to the prior scroll direction. Thus, the display of the list item frame in the prior scroll direction can be maintained while suitably displaying the list item information in the list item frame, which improves user-friendliness in terms of selection of a list item by the user.

According to a fourth aspect of the present invention, the display device may further include: an expansion size setting unit that, based on the list item information, sets an expansion size of the selected list item frame; and an overrun determination unit that determines whether the selected list item frame exceeds a displayable region in the expansion direction if the selected list item frame is expanded in the expansion direction to achieve the expansion size. The setting unit may set the display mode of the list item frame such that the selected list item frame is also expanded in a direction reverse to the expansion direction if the overrun determination unit determines that the selected list item frame exceeds the displayable region in the expansion direction. Thus, the list item frame can be suitably displayed so as not to exceed the displayable region in the expansion direction, which improves user-friendliness in terms of selection of a list item by the user.

According to a fifth aspect of the present invention, when the selected list item frame is expanded, the setting unit may shift the list item frame displayed adjacent to the selected list item frame on a side in a direction reverse to the expansion direction to a position that does not overlap the expanded list item frame. Thus, the order of the list items displayed in the direction reverse to the expansion direction can be maintained when the selected list item frame is expanded, which improves user-friendliness in terms of selection of a list item by the user.

The present invention is described as a display device above, and may also be practiced as a display method or program as follows.
That is, a display method or a program in a computer performs the functions of: scrolling a list; acquiring, when a list item included in the list is selected, a prior scroll direction that is the direction in which the list is scrolled immediately before selection of the list item; setting, based on the prior scroll direction, a display mode of a list item frame that displays list item information related to the list item; and displaying the list item frame in the set display mode. The same effects as those exhibited by the display device described above can be obtained by performing such a display method or executing such a program.

FIG. 1 is a block diagram that shows the constitution of a navigation device according to a first embodiment of the present invention;
FIGS. 2A to 2C are explanatory drawings that illustrate a list displayed on a display according to the first embodiment of the present invention;
FIG. 3 is a flowchart that illustrates an item frame variation process according to the first embodiment of the present invention;
FIG. 4 is a flowchart that illustrates a display mode setting process according to the first embodiment of the present invention;
FIGS. 5A to 5C are explanatory drawings that illustrate a display mode of a list item frame according to Specific Example 1;
FIGS. 6A to 6C are explanatory drawings that illustrate a display mode of a list item frame according to Specific Example 2;
FIG. 7 is a flowchart that illustrates the display mode setting process according to a second embodiment of the present invention;
FIGS. 8A to 8C are explanatory drawings that illustrate a display mode of a list item frame according to Specific Example 3;
FIGS. 9A and 9B are explanatory drawings that illustrate a display mode of a list item frame according to Specific Example 4; and
FIGS. 10A and 10B are explanatory drawings that illustrate a display mode of a list item frame according to Specific Example 4.

Hereinafter, a display device according to embodiments of the present invention will be described on the basis of the drawings.

### First Embodiment

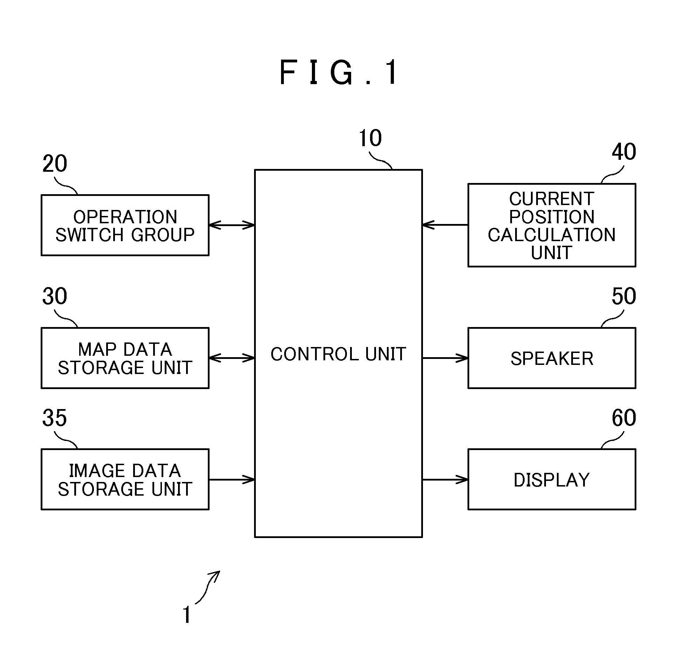

A display device according to a first embodiment of the present invention is applied to a navigation device installed in a vehicle. FIG. 1 is a block diagram that shows the overall constitution of a navigation device 1 serving as the display device according to the first embodiment of the present invention. The navigation device 1 is mainly constituted by a control unit 10, and the control unit 10 is connected to an operation switch group 20, a map data storage unit 30, an image data storage unit 35, a current position calculation unit 40, a speaker 50, and a display 60.

The control unit 10 is constituted by a computer including a CPU, a ROM, a RAM, an I/O, and a bus line connecting these components, and controls the overall system.
The operation switch group 20 is constituted by touch switches or mechanical switches formed integrally with the display 60, a remote control device, or similar, and is used to perform various types of input.

The map data storage unit 30 is a storage device realized by a hard disk drive (HDD), for example. Note that although an HDD is used here, another medium such as a DVD-ROM or a memory card may be used instead.
The map data storage unit 30 stores so-called map matching data for improving the precision of position detection, map data for finding a route, and image data for rendering a map on the display 60. Various types of data are included in the map data, and facility information pertaining to facilities is included as one such type of data. Specifically, the facility information is point of interest (POI) information that is stored associated with an ID identifying a facility. The POI information includes such information as a facility name, facility ID, position coordinates, type (genre), address, telephone number, and hours of operation.

The image data storage unit 35 stores image data for displaying a search screen or the like on the display 60, and is constituted by the same HDD used for the map data storage unit 30. Obviously, another medium such as a memory card may be used instead.
The current position calculation unit 40 calculates the current position of the vehicle. The current position calculation unit 40 has, for example, a geomagnetic sensor, a gyroscopic sensor, a distance sensor, and a Global Positioning System (GPS) receiver that receives radio waves from a satellite. These components respectively possess different property errors, and are therefore interpolated to each other for use. The host vehicle position can be calculated in real time by the current position calculation unit 40.

The speaker 50 is used for voice output such as voice route guidance. The display 60 is a color display device constituted using liquid crystal or the like. Maps, facility information, and so forth are displayed via the display 60.

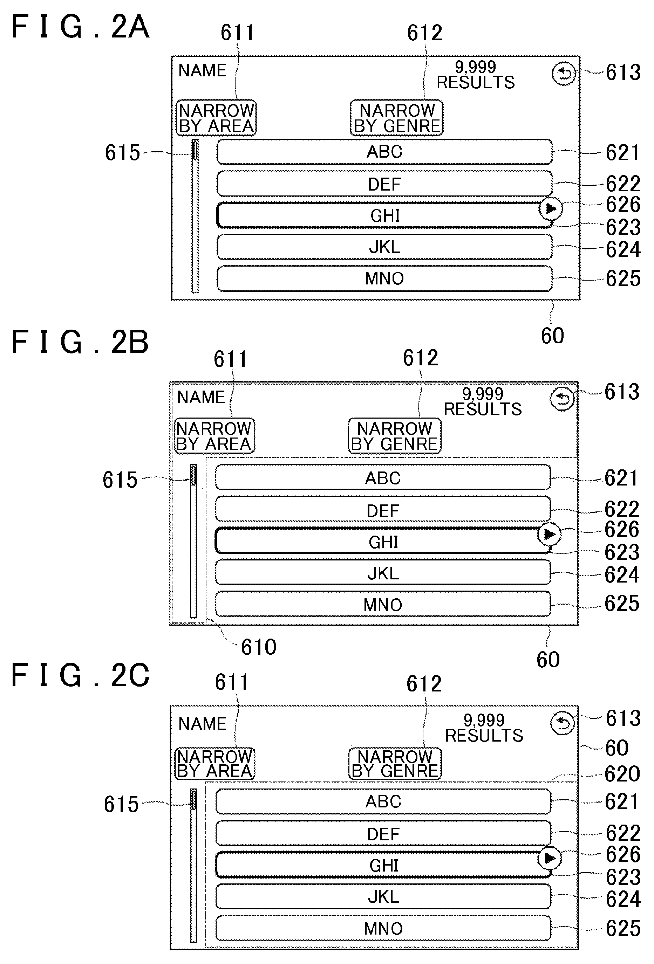

A list displayed on the display 60 will now be described on the basis of FIGS. 2A to 2C.
In the case of a facility search with multiple facility results, for example, the display 60 displays the found facilities as a list. Note that although an example that displays a list of found facilities is described in the present embodiment, the displayed list may be any type of list.
For displaying a list on the display 60, the display 60 is constituted by a fixed region 610 in which information other than a list is displayed, and a list region 620 that serves as a displayable region in which a list is displayed. Note that the fixed region 610 is a region shown by a two-dot chain line in FIG. 2B. The list region 620 is a region shown by a two-dot chain line in FIG. 2C.

Further note that although the list region 620 is a "displayable region" in the present embodiment, the displayable region may be any region within the display 60. For example, the list region 620 in FIG. 2C may be expanded upward in the display and the displayable region may extend to the upper end of the display 60.

In the fixed region 610, an area button 611 for narrowing the facility results by area, a genre button 612 for narrowing the facility results by genre, and a back button 613 for returning to a previous screen are displayed. The fixed region 610 also displays other information such as search conditions and the number of search results.

Within the fixed region 610, a scroll bar 615 is displayed to the left of the list region 620. If the operation switch group 20 is realized by a touch panel integrated with the display 60, sliding the scroll bar 615 downward scrolls the list downward and sliding the scroll bar 615 upward scrolls the list upward. If the operation switch group 20 is realized by a remote control device, operating a down button of the remote control device (not shown in the drawings) that constitutes the operation switch group 20 scrolls the list downward, and the scroll bar 615 also moves downward as a result. Similarly, operating an up button of the remote control device (not shown in the drawings) scrolls the list upward, and the scroll bar 615 also moves upward as a result.

Five list item frames 621 to 625 are displayed in the list region 620. List items included in the list are displayed one by one starting from the head of the list in the five list item frames 621 to 625, and the list items are displayed in order in the list item frames 621 to 625 by scrolling.

Scrolling of the list will be described here. In this example, there are five list items: ABC, DEF, GHI, JKL, and MNO. These five list items are displayed in the list item frames 621 to 625. Note that, although not shown in FIGS. 2A to 2C, there is a list item PQR that follows after the list item MNO. In addition, the list items ABC, DEF, GHI, JKL, MNO, and PQR all represent facility names.

By scrolling the list downward, the list item ABC displayed in the topmost list item frame 621 disappears, the list item DEF displayed in the list item frame 622 is subsequently displayed in the list item frame 621, the list item GHI displayed in the list item frame 623 is displayed in the list item frame 622, the list item JKL displayed in the list item frame 624 is displayed in the list item frame 623, and the list item MNO displayed in the list item frame 625 is displayed in the list item frame 624. In addition, the list item PQR that follows after the list item MNO is displayed in the list item frame 625. Accordingly, when the list is scrolled downward, the list items displayed on the display 60 shift in the direction of the list end from the list head.

By scrolling the list upward when the five list items DEF, GHI, JKL, MNO, and PQR are respectively displayed in the list item frames 621 to 625, the list item PQR displayed in the bottommost list item frame 625 disappears, the list item MNO displayed in the list item frame 624 is subsequently displayed in the list item frame 625, the list item JKL displayed in the list item frame 623 is displayed in the list item frame 624, the list item GHI displayed in the list item frame 622 is displayed in the list item frame 623, and the list item DEF displayed in the list item frame 621 is displayed in the list item frame 622. In addition, the list item ABC that comes before the list item DEF is displayed in the list item frame 621. Accordingly, when the list is scrolled upward, the list items displayed on the display 60 the list items displayed on the display 60 shift in the direction of the list head from the list end.

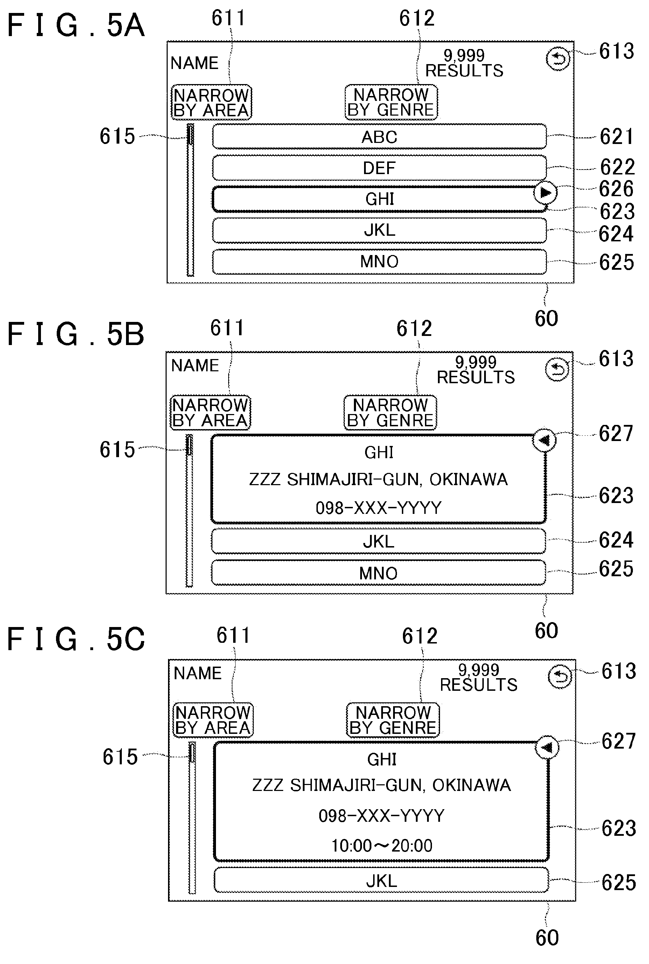

In the example shown in FIGS. 2A to 2C, the list item frame 623 is in a selected state. At the upper right side of the selected list item frame 623, a detailed information display button 626 for displaying detailed information pertaining to the list item displayed in the list item frame 623 is displayed. If the detailed information display button 626 is selected, the list item frame 623 expands to display detailed information. Note that when the list item frame 623 is expanded, a return button 627 that returns the list item frame 623 back to its original size is displayed at the upper right side of the list item frame 623 (see FIG. 5B, for example). If the return button 627 is selected, the list item frame 623 returns to the size shown in FIG. 5A. In the present embodiment, "detailed information for the selected list item" corresponds to "list item information related to the selected list item". Note that the list item information may be constituted by only list items.

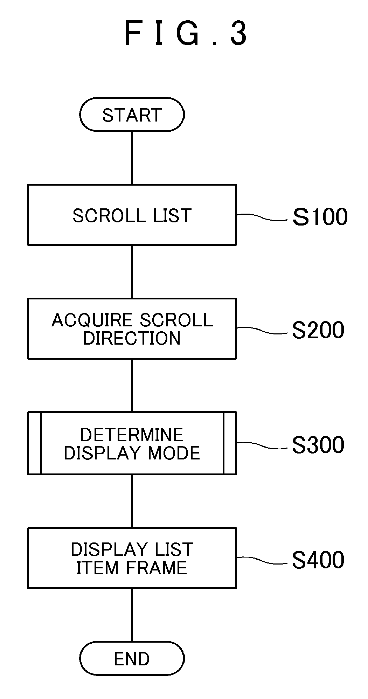

According to the present embodiment, by varying the list item frames that display list item information related to the list items included in the list, the list item information related to the selected list item is displayed while maintaining browsability. Thus, an item frame variation process will be described on the basis of a flowchart shown in FIG. 3.

In the present embodiment, the list displayed on the display 60 relates to facility information. Facility names are displayed as list items, and facility addresses and telephone numbers are displayed as detailed information together with the facility names. In other words, the facility names, addresses, and telephone numbers correspond to list item information in the present embodiment. Further, the item frame variation process shown in FIG. 3 is a process executed when a facility search is performed by a user operating the operation switch group 20, and a list of the found facilities is displayed on the display 60. Note that the item frame variation process shown in FIG. 3 is terminated if there is no selection of a button that displays detailed information, and another process is performed such as canceling the list display, for example.

First, at a step S100 (hereafter, "step" will be omitted and the symbol "S" will be used alone), a list displayed on the display 60 is scrolled based on an operation performed by the user through the operation switch group 20.

At S200, if the user selects through the operation switch group 20 any one of the list items included in the list displayed on the display 60 and selects a button that displays detailed information, i.e., the detailed information display button 626 in FIGS. 2A to 2C, a prior scroll direction that is the direction in which the list was scrolled immediately before selection of the button that displays detailed information is acquired. In the present embodiment, the list is configured so as to scroll in the up-down direction of the display 60. Therefore, the prior scroll direction acquired is either upward or downward.
At S300, a display mode of the list displayed on the display 60 is set based on the prior scroll direction acquired at S200.

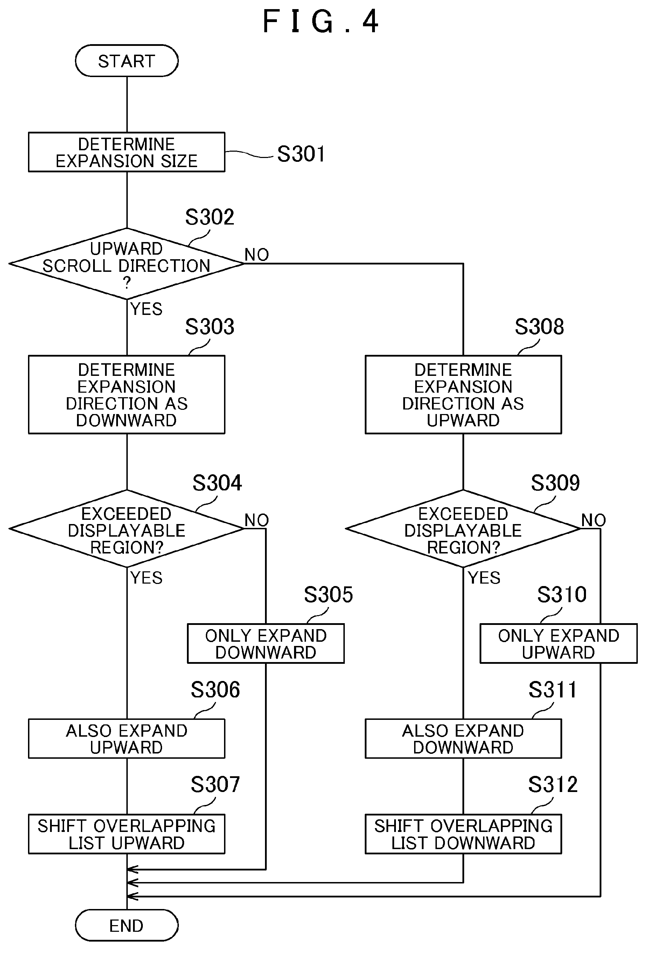

A display mode setting process that sets the display mode of the list will be described on the basis of FIG. 4. The display mode according to the present embodiment is a mode that displays in an expanded manner a list item frame that displays the list item information related to the selected list item. Note that the "list item frame that displays the list item information related to the selected list item" is a "selected item frame", and will be referred to as a "selection item frame" below.
At S301, an expansion size up to which the selection item frame will be expanded is set based on the list item information related to the selected list item. In the present embodiment, facility names, addresses, and telephone numbers are displayed as the list item information. Therefore, the expansion size is set based on formatting such as the number of items and characters, the font size, and the line spacing.

At S302, it is determined whether the prior scroll direction acquired at S200 in FIG. 3 is upward. If the prior scroll direction is not upward (S302: No), the routine proceeds to S308. If the prior scroll direction is upward (S302: Yes), the routine proceeds to S303.

At S303, an expansion direction in which to expand the selection item frame is set as downward. In other words, the expansion direction is set to a direction reverse to the prior scroll direction. Note that when the selection item frame is expanded downward, the selection item frame is expanded downward using the upper end of the selection item frame before expansion as a reference.

At S304, it is determined whether the selection item frame exceeds in the downward direction a displayable region, wherein a list can be displayed, if the selection item frame is expanded downward to achieve the expansion size set at S301. If it is determined that the selection item frame exceeds the displayable region in the downward direction when the selection item frame is expanded downward (S304: Yes), the routine proceeds to S306. If it is determined that the selection item frame does not exceed the displayable region in the downward direction when the selection item frame is expanded downward (S304: No), the routine proceeds to S305.

At S305, the display mode of the list item frames displayed on the display 60 is set such that the selection item frame is expanded only downward.
At S306 to which the routine proceeded if it is determined that the selection item frame exceeds in the downward direction the displayable region, wherein a list can be displayed, when the selection item frame is expanded downward (S304: Yes), the display mode of the list item frames displayed on the display 60 is set such that the selection item frame is also expanded upward.

At S307, the list above the selected list item is shifted upward such that the adjacent list item above the selected list item is displayed in the adjacent list item frame displayed above the selection item frame, when the expansion direction in which to expand the selection item frame is set as upward in addition to downward at S303.

At S308 to which the routine proceeded if it is determined that the prior scroll direction is not upward (S302: No), that is, the prior scroll direction is downward, the expansion direction in which to expand the selection item frame is set as upward. In other words, the expansion direction is set to a direction reverse to the prior scroll direction. Note that when the selection item frame is expanded upward, the selection item frame is expanded upward using the lower end of the list item frame before expansion as a reference.

At S309, it is determined whether the selection item frame exceeds in the upward direction the displayable region, wherein a list can be displayed, if the selection item frame is expanded upward to achieve the expansion size set at S301. If it is determined that the selection item frame exceeds the displayable region in the upward direction when the selection item frame is expanded upward (S309: Yes), the routine proceeds to S311. If it is determined that the selection item frame does not exceed the displayable region in the upward direction when the selection item frame is expanded upward (S309: No), the routine proceeds to S310.

At S310, the display mode of the list item frames displayed on the display 60 is set such that the selection item frame is expanded only upward.
At S311 to which the routine proceeded if it is determined that the selection item frame exceeds in the upward direction the displayable region, wherein a list can be displayed, when the selection item frame is expanded upward (S309: Yes), the display mode of the list item frames displayed on the display 60 is set such that the selection item frame is also expanded downward.

At S312, the list below the selected list item is shifted downward such that the adjacent list item below the selected list item is displayed in the adjacent list item frame displayed below the selection item frame, when the expansion direction in which to expand the selection item frame is set as downward in addition to upward at S308. Because the list item frame is fixed in the present embodiment, this can also be described as: when the selected list item frame is expanded, the list item information related to the list item adjacent to the selected list item on the side in the direction reverse to the expansion direction is displayed in the list item frame displayed at a position that does not overlap with the expanded list item frame. Here, in the case where the list item frame itself is seen as moving, this can also be described as: when the selected list item frame is expanded, the list item frame displayed adjacent to the selected list item frame on the side in the direction reverse to the expansion direction is shifted to a position that does not overlap the selected list item frame. In other words, this means that the adjacent list item is moved so as not to overlap with the expanded list item frame, and the list item frame itself may be moved, or the display location of the list item may be moved. The processing described at S307 is the same.

Returning to FIG. 3, at S400 to which the routine proceeded after the display mode setting process, each list item frame is displayed based on the set display mode of the list item frames, and the list item corresponding to each list item frame is displayed. In addition, the list item information related to the selected list item is displayed in the expanded selection item frame.

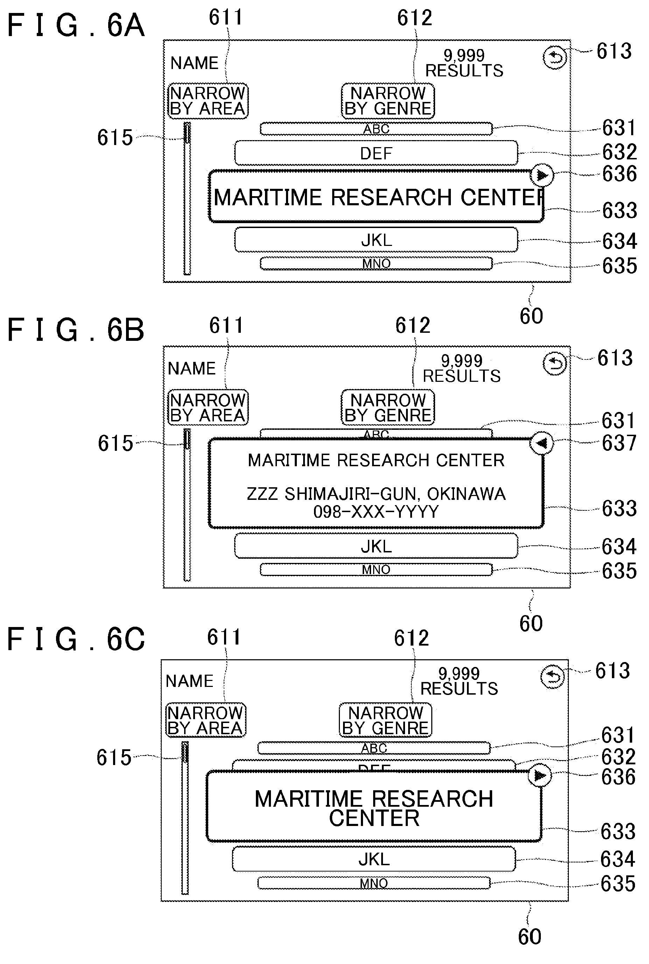

Specific examples of the item frame variation process will now be described based on FIGS. 5A to 5C and FIGS. 6A to 6C.

### Specific Example 1-1

As shown in FIG. 5A, a list of found facilities is displayed on the display 60. The list is scrolled (S 100 in FIG. 3), and the list item frames 621 to 625 display the facility names ABC, DEF, GHI, JKL, and MNO, which serve as list items. In this case, when the facility GHI displayed in the list item frame 623 is selected, the detailed information display button 626 for displaying detailed information pertaining to the corresponding list item is displayed at the upper right side of the list item frame 623, which is the selection item frame. If the detailed information display button 626 is selected, the prior scroll direction that is the direction in which the list was scrolled just before selection of the detailed information display button 626 is acquired (S200), and the display mode of the list item frames is set based on the acquired prior scroll direction (S300).

The process to set the display mode of the list item frames will be described. First, the expansion size is set based on the detailed information of the facility GHI (S301 in FIG. 4). In Specific Example 1-1, the facility name, address, and telephone number are displayed as the detailed information, and therefore the expansion size is set as three lines. In Specific Example 1-1, if the prior scroll direction is downward (S302: No), the expansion direction is set as upward (S308). When the list item frame 623 is expanded upward, three lines of space become available upward of the lower end of the list item frame 623 within the list region 620 (see FIG. 2C). Because the expansion size is three lines, the list item frame 623 can be displayed within the list region 620 if the list item frame 623 is expanded upward to achieve the expansion size (S309: No). Accordingly, the display mode of the list item frames displayed on the display 60 is set such that the list item frame 623 is expanded only upward as shown in FIG. 5B (5310). The detailed information of the facility GHI is then displayed in the expanded list item frame 623 (S400).

Thus, if the prior scroll direction is downward (5302: No), the display mode of the list item frames is set such that the list item frame 623 is expanded only upward (S310). Therefore, the display of the list item frames 624 and 625 below the list item frame 623 remains the same. Accordingly, the facilities JKL and MNO that are the list items displayed in the list item frames 624 and 625 can be displayed while also displaying the detailed information of the facility GHI.

Similarly, if the prior scroll direction is upward (S302: Yes), the display mode of the list item frames is set such that the list item frame 623 is expanded only downward (S305). Therefore, the display of the list item frames 621 and 622 above the list item frame 623 remains the same. Accordingly, the facilities ABC and DEF that are the list items displayed in the list item frames 621 and 622 can be displayed while also displaying the detailed information of the facility GHI.
Thus, the list item information related to the selected list item can be displayed while also ensuring the browsability of the list.
It should be noted that the return button 627 is displayed at the upper right side of the expanded list item frame 623. If the return button 627 is selected or another operation such as a scrolling operation is performed, the display mode returns to that shown in FIG. 5A.

### Specific Example 1-2

In Specific Example 1-1 described above, the facility name, address, and telephone number are displayed as the detailed information. Specific Example 1-2 is a case in which the hours of operation are also displayed and will be described based on FIG. 5C.
When the facility GHI displayed in the list item frame 623 is selected and then the detailed information display button 626 is selected, the prior scroll direction that is the direction in which the list was scrolled just before selection of the detailed information display button 626 is acquired (S200), and the display mode of the list item frames is set based on the acquired prior scroll direction (S300).

The expansion size is set based on the detailed information of the facility GHI (S301). In Specific Example 1-2, the facility name, address, telephone number, and hours of operation are displayed as the detailed information, and therefore the expansion size is set as four lines. In Specific Example 1-2, if the prior scroll direction is downward (S302: No), the expansion direction is set as upward (S308). There are only three lines of space available upward from the lower end of the list item frame 623 within the list region 620 for expanding the list item frame 623 upward. Therefore, if the list item frame 623 is expanded upward by an amount corresponding to four lines, the list item frame exceeds the list region 620 in the upward direction (S309: Yes). Accordingly, the display mode of the list item frames displayed on the display 60 is set such that the list item frame 623 is expanded downward by one line, which is the amount exceeding the list region 620 in the upward direction as shown in FIG. 5C (S311). If the list item frame 623 is expanded downward and displayed as overlapping the list item frame 624, the list item JKL displayed in the list item frame 624 is hidden. However, in a list display, there is a high probability that the user desires to compare the selected list item with other list items nearby. Accordingly, the list is shifted downward such that the adjacent list item frame 625 downward of the expanded list item frame 623, which is the direction reverse to the expansion direction set at S308, displays the facility JKL that is the adjacent list item downward of the facility GHI (S312). The detailed information of the facility GHI is then displayed in the expanded list item frame 623 (S400).

Similarly, if the prior scroll direction is upward (S302: Yes), the expansion direction is set as downward (S303). However, if the list item frame 623 is expanded downward by an amount corresponding to four lines from the upper end of the list item frame 623, the list item frame 623 exceeds the list region 620 in the downward direction (S304: Yes). Accordingly, the display mode of the list item frames displayed on the display 60 is set such that the list item frame 623 is expanded upward by one line, which is the amount exceeding the list region 620 in the downward direction (S306). In addition, the list is shifted upward such that the adjacent list item frame 621 upward of the expanded list item frame 623, which is the direction reverse to the expansion direction, displays the facility DEF that is the adjacent list item upward of the facility GHI (S307). The detailed information of the facility GHI is then displayed in the expanded list item frame 623 (S400).
Thus, the list item information related to the selected list item can be displayed while also ensuring the browsability of the list. In addition, the order of the list items displayed in the direction reverse to the expansion direction, that is, in the scrolling direction, is maintained.

It should be noted that in Specific Example 1-2 explained using FIG. 5C, the return button 627 is also displayed at the upper right side of the list item frame 623 displayed expanded, similar to Specific Example 1-1 shown in FIG. 5B. If the return button 627 is selected or another operation such as a scrolling operation is performed, the display mode returns to that shown in FIG. 5A.
In Specific Example 1, the list item frame 623 that is the selection item frame corresponds to the "selected list item frame".

### Specific Example 2-1

The five list item frames displayed on the display 60 are all the same size in Specific Example 1. In Specific Example 2, as shown in FIG. 6A, a list item frame 633 displayed at the vertical center of the display 60 is displayed large, with list item frames 632 and 634 on both sides of the list item frame 633 displayed smaller than the list item frame 633, and list item frames 631 and 635 at both ends displayed even smaller. With this configuration, the displayed list may appear to rotate when scrolled. In this case, the font used in the list item frames 632 and 634 is considered a standard font, with the font used in the list item frames 631 and 635 smaller than the standard font and the font used in the list item frame 633 larger than the standard font. In addition, the list item frame 633 displayed at the vertical center of the display 60 is always in a selected state, and a detailed information display button 636 is displayed at the upper right side of the list item frame 633 that is the selection item frame.

In Specific Example 2-1, if the detailed information display button 636 is selected, the prior scroll direction is acquired (S200), and the display mode of the list item frames is set based on the acquired prior scroll direction (S300).
The expansion size is set based on the detailed information of a facility named the Maritime Research Center (S301). In Specific Example 2-1, the list item displayed in the list item frame 633 is displayed using a larger font than the standard font. However, the standard font is used to display the detailed information as shown in FIG. 6B. Further, the space between the address and telephone number lines is set small in the display of the detailed information. Thus, the expansion size of the selection item frame is set in consideration of the formatting used to display the detailed information. Note that in Specific Example 1 described above, the expansion size is set depending on the number of lines. However, as shown in FIG. 6B, the expansion size in Specific Example 2-1 is set depending on the number of pixels or the like displayed in the display 60 rather than the number of lines.

When the prior scroll direction is downward (S302: No) and the list item frame 633 is expanded upward to achieve the set expansion size, if the list item frame 633 can be displayed within the list region 620 (S309: No), the display mode of the list item frames displayed on the display 60 is set such that the list item frame 633 is expanded only upward as shown in FIG. 6B (S310). The detailed information of the facility, Maritime Research Center, is then displayed in the expanded list item frame 633 (S400).

It should be noted that a return button 637 is displayed at the upper right side of the expanded list item frame 633, similar to Specific Example 1. If the return button 637 is selected or another operation such as a scrolling operation is performed, the display mode returns to that shown in FIG. 6A.

### Specific Example 2-2

The facility name of Maritime Research Center is long, and as shown in FIG. 6A, the entire facility name, which is a list item, cannot be displayed in the unexpanded list item frame 633.

Thus, in order to display the entire list item, the list item frame 633 is expanded based on the prior scroll direction in Specific Example 2-2. In other words, the expansion size is set based on the number of characters or the like of the list item (S301). When the prior scroll direction is downward (S302: No) and the list item frame 633 is expanded upward to achieve the set expansion size, if the list item frame 633 can be displayed within the list region 620 (S309: No), the display mode of the list item frames displayed on the display 60 is set such that the list item frame 633 is expanded only upward as shown in FIG. 6C (S310). The list item, Maritime Research Center, is then displayed in the expanded list item frame 633 (S400).

Note that because the list item frame 633 is always in a selected state in Specific Example 2-2, if the entire list item to be displayed in the list item frame 633 cannot be displayed, the list item frame 633 may be automatically expanded so as to be capable of displaying the entire list item. Further note that in such case, the facility name corresponds to the "list item" and the "list item information". In other words, "the list item information related to the list item" may be constituted from only the "list item".

If the detailed information display button 636 is selected, the display mode of the list item frames displayed on the display 60 is set in the same manner as Specific Example 2-1 described above (S300), and the detailed information of the expanded list item frame 633 is displayed (S400).
In Specific Example 2, the list item frame 633 that is the selection list frame corresponds to the "selected list item frame".

Hereinafter, effects exhibited by the display device of the present embodiment will be described.
(1) When the list is scrolled (S100) and a list item included in the list is selected, the prior scroll direction that is the direction in which the list was scrolled just before selection of the list item is acquired (S200). Based on the acquired prior scroll direction, the display mode of the list item frame that displays the list item information related to the selected list item is set (S300). The list item frame is then displayed in the set display mode (S400). Thus, the list item frame is displayed in the display mode set based on the prior scroll direction. Therefore, information can be suitably displayed in the list item frame, which improves user-friendliness in terms of selection of a list item by the user.

(2) The display mode in the present embodiment is a mode that displays the selected list item frame in an expanded manner. According to the present embodiment, the expansion direction in which to expand the list item frame is set based on the prior scroll direction (S303, S308). Thus, the list item information can be suitably displayed in the list item frame while also maintaining the display of the list item frame that is in the direction reverse to the expansion direction set based on the prior scroll direction. In addition, the list item information related to the selected list item can be displayed while also ensuring the browsability of the list, thus improving user-friendliness in terms of selection of a list item by the user.

(3) According to the present embodiment, the expansion direction is set to the direction reverse to the prior scroll direction (S303, S308). For example, the display of the list item frame downward of the selection item frame is maintained because the selection item frame is expanded upward if the scroll direction is downward. In such case, the list item information can be suitably displayed in the list item frame while also maintaining the display of the list item frame in the prior scroll direction. In addition, the list item information related to the selected list item can be displayed while also ensuring the browsability of the list, thus improving user-friendliness in terms of selection of a list item by the user.

(4) The expansion size of the selection item frame is set based on the list item information (S301), and it is determined whether the selection item frame exceeds the displayable region in the expansion direction if the selection item frame is expanded in the expansion direction to achieve the expansion size (S304, S309). If it is determined that the selection item frame exceeds the displayable region when the selection item frame is expanded (S304: Yes, S309: Yes), the display mode of the list item frames is set such that the selection item frame is also expanded in the direction reverse to the expansion direction (S306, S311). Thus, the list item frame can be suitably displayed so as not to exceed the displayable region in the expansion direction, which improves user-friendliness in terms of selection of a list item by the user.

(5) When the selection item frame is expanded, the list item frame displayed adjacent to the selection item frame on the side in the direction reverse to the expansion direction is shifted to a position that does not overlap the expanded list item frame (S307, S312). Thus, the order of the list items displayed in the direction reverse to the expansion direction can be maintained when the selection item frame is expanded, which improves user-friendliness in terms of selection of a list item by the user.

Note that, in the present embodiment, the control unit 10 constitutes a scrolling unit, a scroll direction acquisition unit, a setting unit, a display unit, an expansion direction setting unit, an expansion size setting unit, and an overrun determination unit. In FIG. 3, S100 corresponds to processing that carries out the function of the scrolling unit, and S200 corresponds to processing that carries out the function of the scroll direction acquisition unit. S305, S306, S307, S310, S311, and S312 in FIG. 4 correspond to processing that carries out the function of the setting unit, and S400 corresponds to processing that carries out the function of the display unit. In addition, S301 corresponds to processing that carries out the function of the expansion size setting unit; S303 and S308 correspond to processing that carries out the function of the expansion direction setting unit, and S304 and S309 correspond to processing that carries out the function of the overrun determination unit. Note that S307 and S312 that constitute the setting unit may be excluded. Instead of S305, S306, S310, and S311 that constitute the setting unit, the display mode of the list item frames may be set based on only the prior scroll direction without performing the determination processing at S304 and S309.

### Second Embodiment

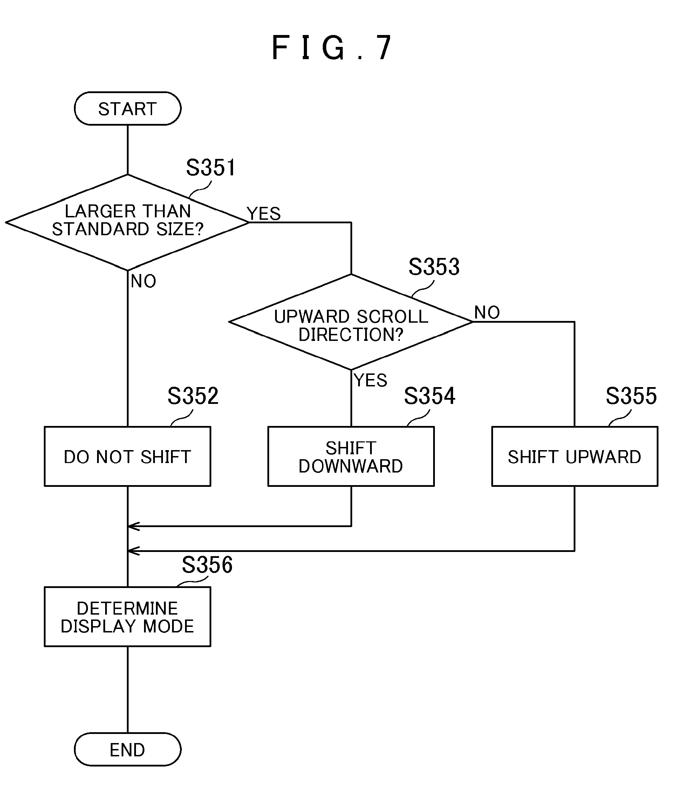

The display device according to a second embodiment of the present invention will be described on the basis of FIGS. 7 to 10. The display device according to the second embodiment of the present invention differs from the first embodiment only in terms of the display mode setting process at S300 in FIG. 3. The following description will therefore focus on the display mode setting process, and descriptions of the overall constitution of the display device and so forth will be omitted.

In the embodiment described above, based on the acquired prior scroll direction, the display mode of the list item frame that displays the list item information related to the selected list item is a mode that displays the list item frame in an expanded manner. However, the display mode of the list item frames is not limited to a mode that displays the selected list item frame in an expanded manner. For example, a display mode that shifts the display position of the selected list item frame as in the present embodiment may be used.

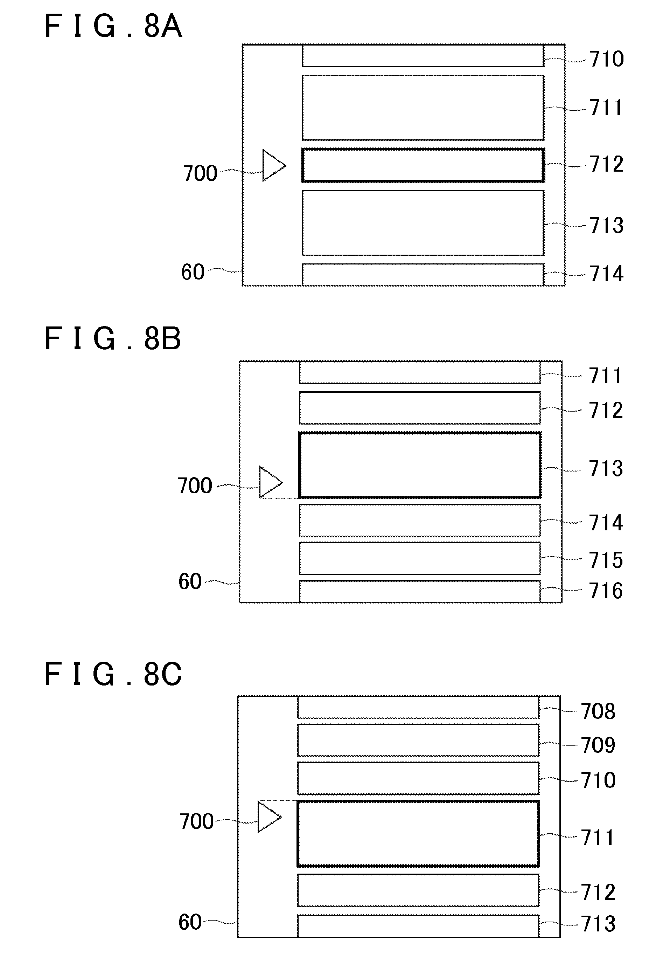

In the embodiment described above, the list item frame is fixed and the list item displayed in the fixed list item frame is shifted when the list is scrolled. In the present embodiment, as shown in FIGS. 8A to 8C and the like, the display position of the list item frame is moved when the list is scrolled. In addition, the list item frame displayed at the vertical center of the display 60 is in a selected state similar to Specific Example 2. This list item frame corresponds to the "selected list item frame". Further, the size of the list item frame is fixed in the left-right direction, and determined in advance in the up-down direction depending on the list item. The standard size of the list item frame is the size of the list item frame capable of displaying one line in the standard font.

A display mode setting process that sets the display mode of the list according to the present embodiment will be described on the basis of FIG. 7. The display mode setting process shown in FIG. 7 is a process executed at S300 in FIG. 3 of the embodiment described above.

At S351, it is determined whether the size of the selection item frame, i.e., the selected list item frame, is larger than the standard size. If it is determined that the size of the selection item frame is larger than the standard size (S351: Yes), the routine proceeds to S353. If it is determined that the size of the selection item frame is equal to or smaller than the standard size (S351: No), the routine proceeds to S352.
At S352, the selection item frame is not shifted from a reference position. Note that, in the present embodiment, the "reference position" is the vertical center of the display 60.

At S353 to which the routine proceeded if it is determined that the size of the selection item frame is larger than the standard size (S351: Yes), it is determined whether the prior scroll direction acquired at S200 in FIG. 3 is upward. If the prior scroll direction is not upward (S353: No), the routine proceeds to S355. If the prior scroll direction is upward (S353: Yes), the routine proceeds to S354.

At S354, a shift direction in which to shift the selection item frame from the reference position is set as downward.
At S355 to which the routine proceeded if it is determined that the prior scroll direction is not upward (S353: No), the shift direction in which to shift the selection item frame from the reference position is set as upward.
At S356, the display mode of the list item frames displayed on the display 60 is set based on the shift direction set at S352, S354, or S355.

In other words, according to the present embodiment, the shift direction in which to shift the selected list item frame from the reference position is set based on the prior scroll direction. In addition, the shift direction in which to shift the selected list item frame from the reference position is set to the direction reverse to the prior scroll direction.

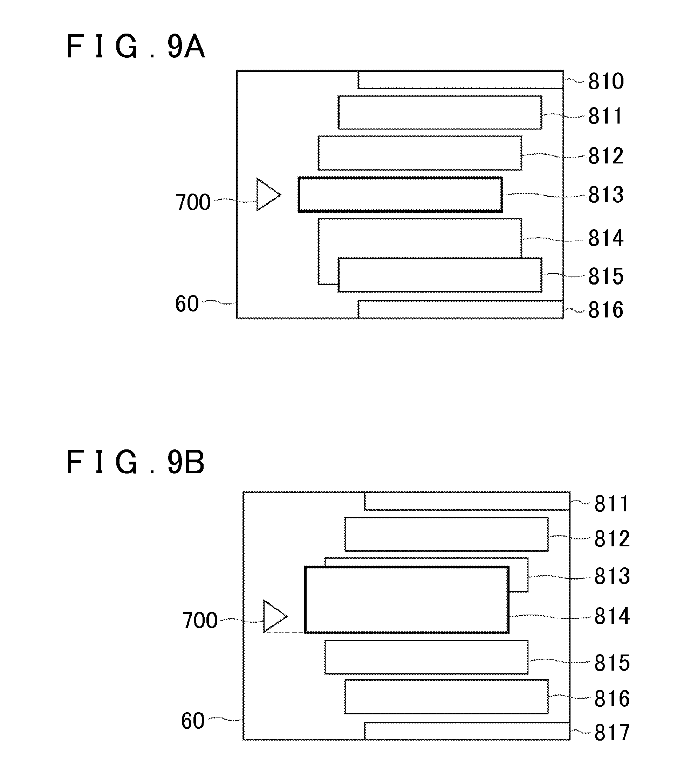

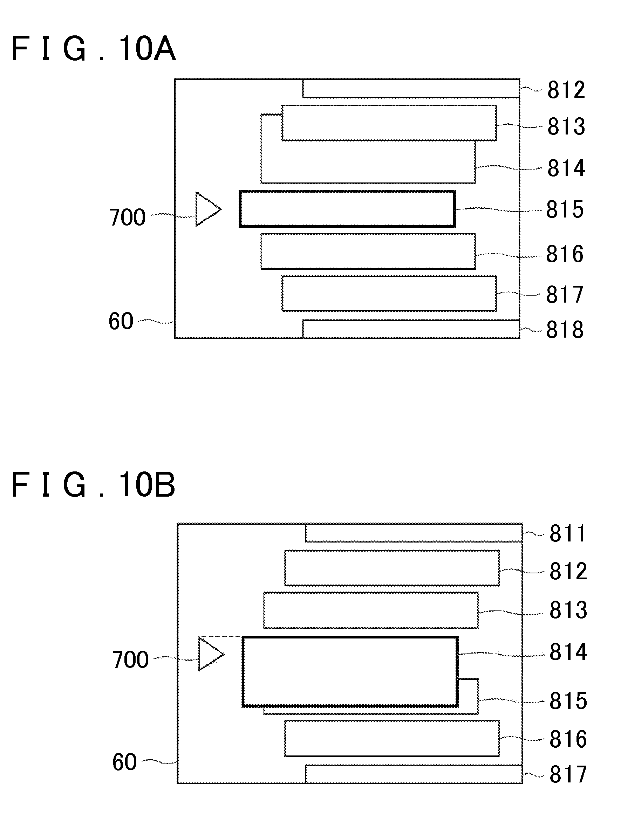

Here, the display mode that shifts the list item frame based on the prior scroll direction will be described based on Specific Example 3 in FIGS. 8A to 8C and Specific Example 4 in FIGS. 9A, 9B, 10A, and 10B.

### Specific Example 3

A cursor 700 is displayed at the vertical center of the display 60, and the list item frame to which the cursor 700 points is in a selected state. Note that the vertical dimension of the cursor 700 matches the vertical dimension of the standard size of the list item frame.

In FIG. 8A, list item frames 710 to 714 are displayed with the list item frame 712 in a selected state. If the list item frame 712 that is the selection item frame is the standard size at such time (S351 in FIG. 7: No), the display mode of the list item frames is set such that the list item frame 712 is displayed at the vertical center of the display 60 (S352, S356).

Here, if the list is scrolled downward by one frame from the state in FIG. 8A, list item frames 711 to 716 are displayed as shown in FIG. 8B and the list item frame 713 displayed larger than the standard size is in a selected state. As shown in FIG. 8B, if the size of the list item frame 713 that is the selection item frame is larger than the standard size (S351: Yes), the prior scroll direction is downward (S353: No), so the shift direction of the list item frame 713 is set as upward (S355), and the display mode of the list item frames is set such that the list item frame 713 is shifted upward from the vertical center of the display 60 (S356). More specifically, the list item frame 713 is displayed such that the lower end of the cursor 700 is aligned with the lower end of the list item frame 713. Thus, a region for displaying other list item frames can be secured in the downward direction regardless of the size of the selection item frame, i.e., the selected list item frame.

If the list is scrolled upward by one frame from the state in FIG. 8A, list item frames 708 to 713 are displayed as shown in FIG. 8C and the list item frame 711 displayed larger than the standard size is in a selected state. As shown in FIG. 8C, if the size of the list item frame 711 that is the selection item frame is larger than the standard size (S351: Yes), the prior scroll direction is upward (S353: Yes), so the shift direction of the list item frame 711 is set as downward (S354), and the display mode of the list item frames is set such that the list item frame 711 is shifted downward from the vertical center of the display 60 (S356). More specifically, the list item frame 711 is displayed such that the upper end of the cursor 700 is aligned with the upper end of the list item frame 711. Thus, a region for displaying other list item frames can be secured in the upward direction regardless of the size of the selection item frame.

### Specific Example 4

Similar to Specific Example 3, in Specific Example 4, the size of the list item frame is determined in advance depending on the list item, and the position of the list item frame moves based on scrolling of the list. In Specific Example 4, the horizontal centers of the list item frames are positioned on a curved line that curves out toward the left side of the display 60, such that the list item frame displayed at the vertical center of the display 60 is displayed most leftward.

The size of the list item frames and the cursor 700 in Specific Example 4 are the same as in Specific Example 3. In Specific Example 4, when the size of the list item frame is larger than the standard size, that particular list item frame is displayed overlapping with other list item frames as shown in FIGS. 9A, 9B, 10A, and 10B.

In FIG. 9A, list item frames 810 to 816 are displayed with the list item frame 813 in a selected state. If the list item frame 813 that is the selection item frame is the standard size at such time (S351: No), the display mode of the list item frames is set such that the list item frame 813 is displayed at the vertical center of the display 60 (S352, S356).

Here, if the list is scrolled downward by one frame from the state in FIG. 9A, list item frames 811 to 817 are displayed as shown in FIG. 9B and the list item frame 814 displayed larger than the standard size is in a selected state. As shown in FIG. 9B, if the size of the list item frame 814 that is the selection item frame is larger than the standard size (S351: Yes), the prior scroll direction is downward (S353: No), so the shift direction of the list item frame 814 is set as upward (S355), and the display mode of the list item frames is set such that the list item frame 814 is shifted upward from the vertical center of the display 60 (S356). More specifically, the list item frame 814 is displayed such that the lower end of the cursor 700 is aligned with the lower end of the list item frame 814, and also displayed overlapping on top of the list item frame 813 adjacent in the upward direction. Thus, regardless of the size of the selected list item frame, a region for displaying other list item frames can be secured in the downward direction such that the selected list item frame does not overlap with the list item frames in the downward direction.

In FIG. 10A, list item frames 812 to 818 are displayed with the list item frame 815 in a selected state. If the list item frame 815 that is the selection item frame is the standard size at such time (S351: No), the display mode of the list item frames is set such that the list item frame 815 is displayed at the vertical center of the display 60 (S352, S356).

Here, if the list is scrolled upward by one frame from the state in FIG. 10A, the list item frames 811 to 817 are displayed as shown in FIG. 10B and the list item frame 814 displayed larger than the standard size is in a selected state. As shown in FIG. 10B, if the size of the list item frame 814 that is the selection item frame is larger than the standard size (S351: Yes), the prior scroll direction is upward (S353: Yes), so the shift direction of the list item frame 814 is set as downward (S354), and the display mode of the list item frames is set such that the list item frame 814 is shifted downward from the vertical center of the display 60 (S356). More specifically, the list item frame 814 is displayed such that the upper end of the cursor 700 is aligned with the upper end of the list item frame 814, and also displayed overlapping on top of the list item frame 815 adjacent in the downward direction. Thus, regardless of the size of the selected list item frame, a region for displaying other list item frames can be secured in the upward direction such that the selected list item frame does not overlap with the list item frames in the upward direction.

As thus described in detail, the display device according to the present embodiment exhibits the same effects as described in (1) above.
In addition, the shift direction in which to shift the list item frame is set based on the prior scroll direction (S354, S355). Thus, the display of the list item frame on the side in the direction reverse to the shift direction set based on the prior scroll direction can be maintained while suitably displaying the list item information in the list item frame, which improves user-friendliness in terms of selection of a list item by the user.

Further, the shift direction is set to the direction reverse to the prior scroll direction (S354, S355). For example, the display of the list item frame downward of the selection item frame is maintained because the selection item frame is shifted upward if the prior scroll direction is downward. In such case, the list item information can be suitably displayed in the list item frame while also maintaining the display of the list item frame in the prior scroll direction, which improves user-friendliness in terms of selection of a list item by the user.
Note that, in the present embodiment, S356 in FIG. 7 corresponds to processing that carries out the function of the setting unit.

The present invention is not limited to the embodiments described above, and may be implemented in various embodiments within a range that does not depart from the scope of the invention.
(A) In the embodiments described above, the scroll direction is upward and downward, but the scroll direction may be leftward and rightward. Also, in the embodiments described above, the selection item frame is expanded in the direction reverse to the prior scroll direction. However, the selection item frame may be expanded in the same direction as the prior scroll direction.

(B) In the embodiments described above, the display device is practiced as a navigation device and installed in a vehicle. However, the present invention is not limited to a navigation device. In other embodiments, various types of devices capable of list displays such as music players, for example, may be used. Further, the display device may not be installed in a vehicle. Note that the map data storage unit, the current position calculation unit, and the speaker of the display device according to the embodiments described above may be omitted. In addition, the display may be configured as a device separate from the display device provided with the control unit.

(C) In the embodiments described above, the control unit constitutes the scrolling unit, the scroll direction acquisition unit, the setting unit, the display unit, the expansion direction setting unit, the expansion size setting unit, and the overrun determination unit. In other embodiments, the scrolling unit, the scroll direction acquisition unit, the setting unit, the display unit, the expansion direction setting unit, the expansion size setting unit, and the overrun determination unit may be functions that a program performs in a computer, or a storage medium that stores such a program.

A display device is described which comprises a scrolling unit that is configured to scroll a list, a scroll direction acquisition unit that, when a list item included in the list is selected, is configured to acquire a prior scroll direction that is a direction in which the list is scrolled immediately before selection of the list item, a setting unit that, based on the prior scroll direction, is configured to set a display mode of a list item frame that displays list item information related to the list item, and a display unit that is configured to display the list item frame in the set display mode. Thus, the list item frame is displayed in the display mode set based on the prior scroll direction. Therefore, information can be suitably displayed in the list item frame, which improves user-friendliness for selection of a list item by the user.

## Claims

1. A display device (1), comprising:
a scrolling unit (10) that is configured to scroll a list;
a scroll direction acquisition unit (10) that, when a list item included in the list is selected, is configured to acquire a prior scroll direction that is a direction in which the list is scrolled immediately before selection of the list item;
a setting unit (10) that, based on the prior scroll direction, is configured to set a display mode of a list item frame that displays list item information related to the list item; and
a display unit (10) that is configured to display the list item frame in the set display mode.

2. The display device (1) according to claim 1, wherein
the display mode is a mode in which the list item frame that displays the list item information related to the selected list item is displayed in an expanded manner, and
an expansion direction setting unit (10) is further provided that is configured to set an expansion direction in which to expand the selected list item frame based on the prior scroll direction.

3. The display device (1) according to claim 2, wherein
the expansion direction setting unit (10) is configured to set the expansion direction to a direction reverse to the prior scroll direction.

4. The display device (1) according to claim 2 or 3, further comprising:
an expansion size setting unit (10) that, based on the list item information, is configured to set an expansion size of the selected list item frame; and
an overrun determination unit (10) that is configured to determine whether the selected list item frame exceeds a displayable region in the expansion direction if the selected list item frame is expanded in the expansion direction to achieve the expansion size, wherein
the setting unit (10) is configured to set the display mode of the list item frame such that the selected list item frame is also expanded in a direction reverse to the expansion direction if the overrun determination unit (10) determines that the selected list item frame exceeds the displayable region in the expansion direction.

5. The display device (1) according to claim 4, wherein
when the selected list item frame is expanded, the setting unit (10) is configured to shift the list item frame displayed adjacent to the selected list item frame on a side in the direction reverse to the expansion direction to a position that does not overlap the expanded list item frame.

6. A display method, comprising
a scrolling step (S100) for scrolling a list;
an acquiring step (S200) for acquiring, when a list item included in the list is selected, a prior scroll direction that is a direction in which the list is scrolled immediately before selection of the list item;
a first setting step (S305, S310) for setting, based on the prior scroll direction, a display mode of a list item frame that displays list item information related to the list item; and
a displaying step (S400) for displaying the list item frame in the set display mode.

7. The display method according to claim 6, wherein
the display mode is a mode in which the list item frame that displays the list item information related to the selected list item is displayed in an expanded manner, and wherein the display method further comprises
a second setting step (S303, S308) for setting an expansion direction in which to expand the selected list item frame based on the prior scroll direction.

8. The display method according to claim 7, wherein
in the second setting step (S303, S308), the expansion direction is set to a direction reverse to the prior scroll direction.

9. The display method according to claim 7 or 8, further comprising:
a third setting step (S301) for setting, based on the list item information, an expansion size of the selected list item frame; and
a determining step (S304, S309) for determining whether the selected list item frame exceeds a displayable region in the expansion direction if the selected list item frame is expanded in the expansion direction to achieve the expansion size, wherein
in the first setting step (S305, S310), the display mode of the list item frame is set such that the selected list item frame is also expanded in a direction reverse to the expansion direction if it is determined in the determining step (S304, S309) that the selected list item frame exceeds the displayable region in the expansion direction.

10. The display method according to claim 9, wherein
in the first setting step (S305, S310), when the selected list item frame is expanded, the list item frame displayed adjacent to the selected list item frame on a side is shifted in a direction reverse to the expansion direction to a position that does not overlap the expanded list item frame.

11. A computer program product including a program for a processing device, comprising software code portions for performing the steps of any one of claims 6 to 10 when the program is run on the processing device.

12. The computer program product according to claim 11, wherein the computer program product comprises a computer-readable medium on which the software code portions are stored, wherein the program is directly loadable into an internal memory of the processing device.
